# EUROPEAN PATENT SPECIFICATION

(11) **EP 2 695 594 B1**
(45) Date of publication and mention of the grant of the patent: **20.01.2016**
(21) Application number: 12768098.1
(22) Date of filing: 06.04.2012
(51) Int. Cl.: A61J 1/06, B29C 49/04, B65D 1/02, C08L 45/00, B65D 1/09

(54) **PLASTIC AMPULE**
KUNSTSTOFFAMPULLE
AMPOULE EN PLASTIQUE

(30) Priority: 06.04.2011 JP 2011084740
(43) Date of publication of application: 12.02.2014
(73) Proprietor: OTSUKA PHARMACEUTICAL FACTORY, INC., Muya-cho, Naruto-shi, Tokushima 772-8601, (JP)
(72) Inventor: TOGAWA, Akihito, Naruto-shi, Tokushima 772-8601, (JP); SAMEJIMA, Yosuke, Naruto-shi, Tokushima 772-8601, (JP)
(74) Representative: Hoffmann Eitle
(86) International application number: PCT/JP2012/059577
(87) International publication number: WO 2012/137945

(56) References cited:
- EP-A1- 1 616 549
- EP-A1- 2 266 521
- WO-A1-2004/093775
- JP-A- 2001 506 887
- JP-A- 2006 341 375
- JP-A- 2008 104 868

## Description

### Technical Field

The present invention relates to a plastic ampule made of a cyclic polyolefin storing a drug solution.

### Background Art

Containers such as ampules for storing a drug solution have undergone recent changes from containers made of glass to those made of plastic (plastic ampule) in light of strength against impact, ease in handling, safety and the like.

For example, a medical instrument made of a thermoplastic norbornene has been proposed (see Patent Document 1). In addition, a container for a sanitary commodity, made of a resin material having a cyclic olefin-based compound as a polymer component has been proposed (see Patent Document 2).

In addition, a stretch blow bottle which was formed by using a composition composed by blending two cyclic olefin copolymers having different glass transition temperatures has been proposed (see Patent Document 3).

### Citation List

### Patent Documents

Patent Document 1: Japanese Unexamined Patent Publication No. 05-317411
Patent Document 2: Japanese Unexamined Patent Publication No. 05-293159
Patent Document 3: Japanese Unexamined Patent Publication No. 11-80492

### Outline of the Invention

### Problems to be Solved by the Invention

As for the plastic containers disclosed in Patent Documents 1, 2 and 3, the decrease in the drug solution content due to permeation of the drug solution outside of the container can be reduced as much as possible by ensuring a certain water vapor barrier property, but there is a problem with low moldability of the container. For example, when the container is taken out of the openedmold after blowmolding of the container, a crack may occur in the container.

Thus, the object of the present invention is to provide a plastic ampule which can express an excellent water vapor barrier property and moldability, reduce scattering of the fragments during opening, and stabilize the shape of the cutting part after opening.

### Means for Solving the Problems

The plastic ampule of the present invention for achieving the object: is composed of a single layer of a plastic layer consisting only of a cyclic polyolefin with a glass transition temperature of 50°C to 104°C; is formed in a bottle shape with a top part and a bottom part; integrally comprises an ampule body having a bung for discharging the drug solution on the top part, a cap attached to the ampule body so as to seal the bung, and a thinner part having a layer thickness thinner than those of the ampule body and the cap, formed along a circumferential direction of the bung and connecting between the ampule body and the cap; and is opened by breaking off or twisting off the thinner part as a cutting part between the ampule body and the cap.

According to this constitution, the plastic ampule is made of a cyclic polyolefin, which comprises the single layer of the plastic layer consisting only of the cyclic polyolefin with the glass transition temperature Tg of 50°C to 104°C. Thereby, cracks can be prevented from occurring during molding, and excellent moldability and opening performance can be expressed.

In addition, the cyclic polyolefin ampule can increase the water vapor barrier property (decrease the moisture vapor permeation rate) compared to ampules made of polyolefin such as polyethylene and polypropylene generally used and can express a water vapor barrier property equivalent to that of the glass ampule. Additionally, the glass ampule may break when it falls and hits the ground, but the cyclic polyolefin ampule of the present invention does not easily break even when it falls and hits the ground.

Furthermore, the cyclic polyolefin ampule is not a flexible container like a polyolefin ampule but a rigid container. Thereby, when the drug solution is discharged by inserting a syringe needle from the bung into the ampule body, even if the syringe needle pokes the bottom part of the ampule body because of an excessive insertion length of the syringe needle, the bottom part can be prevented from being pierced by the syringe needle.

Meanwhile, when a method in which the thinner part as a cutting part is broken off between the ampule body and the cap is adopted as an opening method of the ampule as in the present invention, attention should be paid to scattering of the fragments and stability of the shape of the cutting part after opening. For example, when the glass ampule is broken off, some pieces (fragments) of the ampule body and the cap scatter, and the fragments may enter the ampule from the bung. Even if breaking off of the cap along the prescribed cutting part is attempted, a cut line occurs in a portion other than the cutting part, and sharp resin pieces are likely to remain after opening. Consequently, since attention should be paid to its handling after opening, it cannot be said that it is easy to handle.

Thus, in the present invention, scattering of the fragments in breaking off can be prevented by applying the plastic ampule composed of the single plastic layer of the cyclic polyolefin and using only a cyclic polyolefin with the glass transition temperature Tg of 50°C to 104°C. In addition, the cap can be preferably broken off along the thinner part set as a cutting part. This allows the cutting part to be stabilized in a desired shape after opening.

Additionally, in the plastic ampule of the present invention, the cyclic polyolefin is a polymer having repeating units indicated by the following Formula (2).
[Chemical Formula 1] 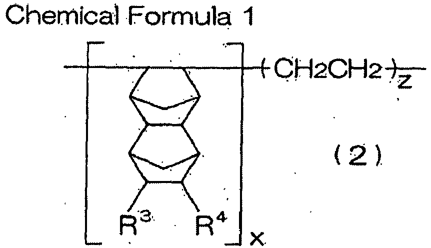 wherein R³, R⁴, x and z are as defined below.

Additionally, in the plastic ampule of the present invention, the layer thickness of the ampule body may be 500 µm to 1200 µm. According to the present invention, if the thickness of the ampule body is within the above-mentioned range, excellent moldability can be effectively expressed. Furthermore, if the thickness of the ampule body is within the above-mentioned range, the ampule body can be easily opened by bending or twisting the cap with little strength while maintaining good water vapor barrier property.

Additionally, in the plastic ampule of the present invention, the content of the drug solution in the plastic ampule may be a small volume, for example, of 1 mL to 5 mL. According to the present invention, the ampule can be preferably applied to ampules for a drug solution in which a dose is small like a narcotic (for example, morphine etc.) and sufficient effects of the drug are hardly obtained when a ratio of its content stored in a dose unit is severely decreased. In this case, a capacity of the ampule body for the drug solution is 1.5 mL to 7.5 mL.

Additionally, in the plastic ampule of the present invention, it is preferable that the thinner part is formed with a thickness that allows opening by breaking off the thinner part by a force of 70 N·m/mm or less.

Additionally, in the plastic ampule of the present invention, it is preferable that the thinner part is formed with a thickness that allows opening by twisting off the thinner part with a force of 0.900 N·m or less.

Additionally, in the plastic ampule of the present invention, it is preferable that the cap is a tab formed in a flat shape. Thereby, for example, while the ampule body is held by the fingers of one hand, the tab is squeezed by the fingers of the other hand (for example, two fingers, thumb and index finger) and bent or twisted, so that force can be easily applied to the thinner part. As a result, the opening performance of the ampule can be improved.

### Brief Description of the Drawings

[Fig. 1] Fig. 1 is a front view of the plastic ampule in the first embodiment of the present invention.
[Fig. 2] Fig. 2 is a left side view of the plastic ampule shown in Fig. 1.
[Fig. 3] Fig. 3 is a plan view of the plastic ampule shown in Fig. 1.
[Fig. 4] Fig. 4 is a bottom view of the plastic ampule shown in Fig. 1.
[Fig. 5] Fig. 5 is a sectional view taken along line A-A of the plastic ampule shown in Fig. 1.
[Fig. 6] Fig. 6 is a view indicating a state after opening of the glass ampule in the same shape as the plastic ampule shown in Fig. 1.
[Fig. 7] Fig. 7 is a view indicating a state after opening of the plastic ampule shown in Fig. 1.
[Fig. 8] Fig. 8 is a front view of the plastic ampule in the second embodiment of the present invention.
[FIG. 9] FIG. 9 is a left side view of the plastic ampule shown in Fig. 8.
[FIG. 10] FIG. 10 is a plan view of the plastic ampule shown in Fig. 8.
[Fig. 11] Fig. 11 is a bottom view of the plastic ampule shown in Fig. 8.
[Fig. 12] Fig. 12 is a sectional view taken along line B-B of the plastic ampule shown in Fig. 8.
[Fig. 13] Fig. 13 is a graph indicating a relationship between the thickness T₁ of the ampule body and the opening performance. Embodiments of the Invention

The embodiments of the present invention shall now be described in detail with reference to the attached drawings.

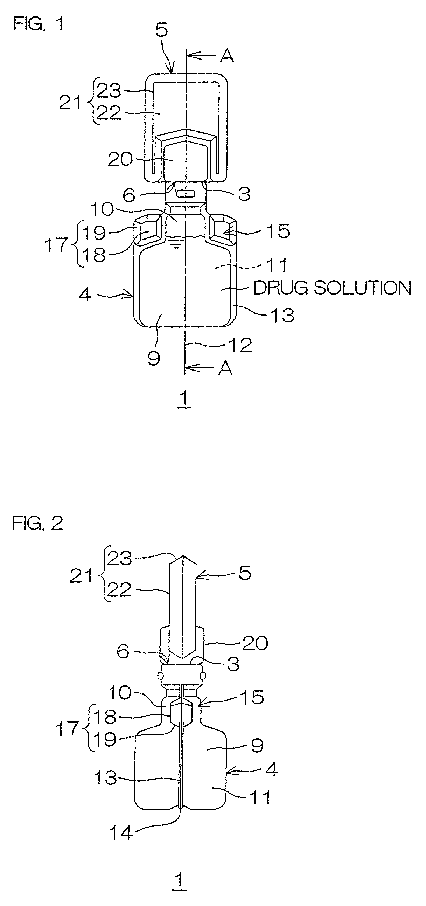

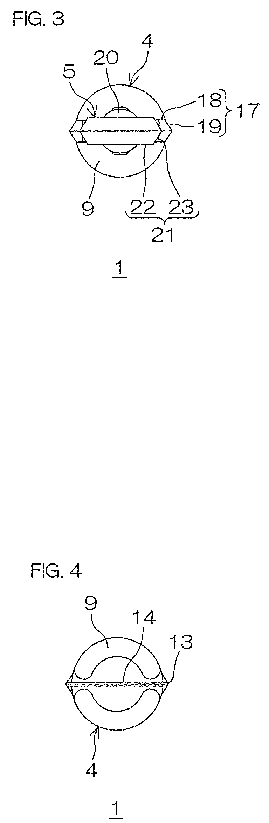

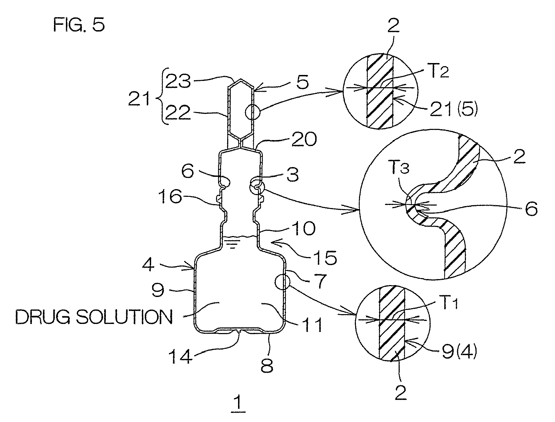

Fig. 1 is the front view of the plastic ampule in the first embodiment of the present invention. Fig. 2 is the left side view of the plastic ampule shown in Fig. 1. Fig. 3 is the plan view of the plastic ampule shown in Fig. 1. Fig. 4 is the bottom view of the plastic ampule shown in Fig. 1. Fig. 5 is the sectional view taken along line A-A of the plastic ampule shown in Fig. 1. In relation to the plastic ampule shown in Fig. 1, the rear view coincides with the front view (Fig. 1), and the right side view coincides with the left side view (Fig. 2).

The plastic ampule 1 comprises a single layer of a plastic layer 2 (see Fig. 5), formed in a nearly bottle shape having one end and the other end, and integrally comprises an ampule body 4 having a bung 3 for discharging the drug solution on the one end, a cap 5 attached to the ampule body 4 so as to seal the bung 3 and a thinner part 6 formed along a circumferential direction of the bung 3 and connecting between the ampule body 4 and the cap 5.

The plastic layer 2 consists of only cyclic polyolefin with the glass transition temperature Tg of 50°C to 104°C. "Only cyclic polyolefin" means that the cyclic polyolefin with the glass transition temperature Tg is used alone, and a cyclic polyolefin with a glass transition temperature outside the range is not combined. However, a cyclic polyolefin with a glass transition temperature Tg within the range may be combined. In addition, a Vicat softening point of the plastic layer 2 measured according to JIS K 7206 is, for example, 60°C to 120°C. The glass transition temperature Tg of the cyclic polyolefin is a midpoint glass transition temperature (T_{mg}) measured by input compensation differential scanning calorimetry (input compensation DSC) described in JIS K 7121₋₁₉₈₇ "Testing methods for Transition Temperatures of Plastics."

When the glass transition temperature Tg of the cyclic polyolefin is below 50°C, the shape deteriorates in sterilization at a high temperature due to poor heat resistance. When the glass transition temperature Tg of the cyclic polyolefin is over 104°C, there is a problem that cracks occur on a peripheral wall 7 and a bottom wall 8 of a trunk 9 mentioned below in molding of the plastic ampule 1, and the opening performance is inhibited.

The cyclic polyolefin with the glass transition temperature Tg of 50°C to 104°C used for formation of the plastic layer 2 includes copolymers of ethylene and a norbornene-based compound, and their hydrides, of which the glass transition temperatures Tg are within the range of 50°C to 104°C.

These cyclic polyolefins may be respectively used alone, or alternatively two or more of them are mixed for use. Preferably, the cyclic polyolefin may include, above all, the hydride of the copolymer of ethylene and the norbornene-based compound. In accordance with the present invention, the cyclic polyolefin has repeating units of the following formula (2): 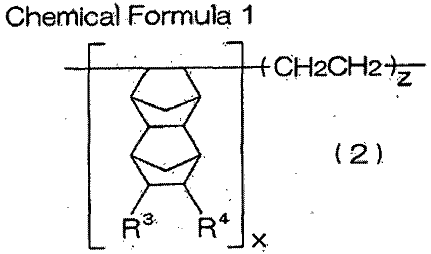 wherein R³ and R⁴ are the same or different, with each indicating hydrogen, a hydrocarbon residue, or a polar group. R³ and R⁴ may respectively be bonded mutually to form a ring. x and z are the same or different with each indicating an integer not less than 1.

As an example of the hydrocarbon residue, an alkyl group can be cited, an alkyl group with 1 to 6 carbons can be cited as a preferable example, and an alkyl group with 1 to 4 carbons can be cited as a more preferable example.

As examples of the polar group, a halogen atom (for example, fluorine atom, chlorine atom, bromine atom, iodine atom, etc.), an ester, a nitrile, a pyridyl, etc., can be cited.

A polymer having the repeating units indicated by the General Formula (2) is obtained by additive copolymerization of one or two or more types of a norbornene-based monomer and ethylene as monomers using a known method, and/or by hydrogenation of them using a conventional method.

Such a polymer can be obtained, for example, as a product of the trade name "APEL (registered trademark)" made by Mitsui Chemicals, Inc., or a product of the trade name "Topas (registered trademark)," made by Ticona GmbH.

Of the polymers having the repeating units indicated by the General Formula (2), the hydrides are saturated polymers in all cases and are thus excellent in gas blocking property and water blocking property as well as in heat resistance, transparency, and stability.

The polymer having the repeating units indicated by General Formula (2) is used in view of the fact that the ampule body 4 is opened by breaking off the cap 5. By forming the plastic ampule 1 using this polymer, the cap 5 can be broken off with weaker force than in the former case.

The ampule body 4 comprises the closed-end cylindrical (columnar) trunk 9 which has the peripheral wall 7 and the circular bottom wall 8 and forms the bottom wall of the ampule body 4, and a nearly-cylindrical neck part 10 which communicates with an end opposite to the bottom wall 8 in the trunk 9 and has a smaller diameter than that of the trunk 9. In the first embodiment, a columnar hollow part separated by the peripheral wall 7 and the bottom wall 8 in the trunk 9 is a drug solution storage cell 11 for storing the drug solution.

The trunk 9 of the ampule body 4 maybe in an elliptical columnar shape by forming the bottom wall 8 in an elliptical shape (e.g., ellipse with a major axis of about 2 cm and a minor axis of about 1 cm). The trunk 9 formed in the elliptical columnar shape can prevent the plastic ampule 1 from rolling when the plastic ampule 1 is laid so that the peripheral wall 7 is in contact with the ground. If a blow-fill-seal molding mentioned below is adopted, such an elliptical columnar trunk 9 can be easily formed by changing a shape of a split mold in which a resin is sandwiched.

A content of the drug solution stored in the drug solution storage cell 11 is, for example, 1 mL to 5 mL. Also, the kinds of the stored drug solution may be exemplified by an injection solvent (particularly, a narcotic such as morphine), saline and the like.

The thickness T₁ of the peripheral wall 7 and the bottom wall 8 in the trunk 9 (layer thickness of the plastic layer 2 of the ampule body 4) is, for example, 500 µm to 1200 µm (see Fig. 5).

On the peripheral wall 7 of the trunk 9, ribs 13 protruding outward from the peripheral wall 7 are linearly installed in an axis direction of a central axis 12, in an arrangement that they are opposite to each other across the central axis 12 of the ampule body 4. A rib 14 protruding outward from the bottom wall 8 is installed on the bottom wall 8 of the trunk 9. The ribs 13 on the peripheral wall 7 and the rib 14 on the bottom wall 8 are continuously connected with each other.

The two ribs 13 and 14 continuously connected with each other are formed resulting from the manufacturing method for the plastic ampule 1. Stiffness of the ampule body 4 can be improved by forming the ribs 13 and 14. As a result, the shape of the ampule body 4 can be maintained.

On the extended line of the side of the neck part 10 in the rib 13 on the peripheral wall 7, a reinforcing member 17 which spans across the peripheral wall 16 of the neck part 10 and the peripheral wall 7 of the trunk 9 is installed in a stepped part 15 formed resulting from a difference between the inner diameters of the trunk 9 and the neck part 10.

Since the reinforcing member 17 is formed so as to span between the neck part 10 and the trunk 9, stiffness from the trunk 9 to the neck part 10 can be remarkably improved. Thereby, the neck part 10 protruding from the trunk 9 is not easily broken, for example, during shipping and handling of the plastic ampule 1. In addition, when the tab 21 (mentioned below) is squeezed and broken off the thinner part 6, hands and fingers can be easily placed on the reinforcing members 17. Furthermore, the plastic ampule 1 can be easily and reliably opened because of secure effects of a whirl stop.

The reinforcing member 17 has a flat part 18 and a beveled part 19 surrounding the flat part 18. In the reinforcing member 17, a hollow thicker part is formed. Thereby, stiffness of the reinforcing member 17 itself is maintained, and the stiffening effect is further enhanced, therefore deformation of the reinforcing member 17 by grasping the reinforcing member 17 can be reduced. In addition, fingers can preferably touch the reinforcing member 17 when the tab 21 (mentioned below) is twisted.

The neck part 10 has the bung 3 of the ampule body 4. Preferably, the neckpart 10 has an inner diameter for fitting the nozzle of the syringe to be used, so that a nozzle can be stably fixed, for example, when the nozzle of a syringe for sucking a drug solution in the ampule body 4 is inserted. The cap 5 is connected to the neck part 10 of the ampule body 4 via the thinner part 6, has nearly the same diameter as the neck part 10, and comprises a cylindrical connecting part 20 with a closed top part and a tab 21 spanning across a peripheral wall and a tap wall of the connecting part 20.

The tab 21 which has a flat part 22 and a beveled part 23 surrounding the flat part 22 is formed in a flat shape. In the tab 21, a hollow thicker part is formed. Thereby, stiffness of the tab 21 itself is maintained, therefore deformation of the tab 21 by grasping the tab 21 can be reduced. Because of the flat shape of the tab 21, while the ampule body 4 is held by the fingers of one hand, the tab 21 is squeezed by the fingers of the other hand (for example, two fingers, thumb and index finger) and bent, so that a force can be easily applied to the thinner part 6. As a result, the opening performance of the plastic ampule 1 can be improved.

The thickness T₂ of the tab 21 (layer thickness of the plastic layer 2 in the cap 5) is, for example, the same as the thickness T₁ of the trunk 9 (500 µm to 1200 µm) (see Fig. 5).

The tab 21 is preferably formed along the same plane as the reinforcing member 17 as shown in FIG. 2. In this case, a slim outer appearance is obtained, and the plastic ampule 1 is thereby made easy to store. In addition, the tab 21 may be formed in a direction orthogonal to the reinforcing member 17.

The tab 21 and the reinforcing member 17 can be molded along with the respective parts of the ampule body 4 during manufacture of the plastic ampule 1.

The thinner part 6 is made thinner than a film thickness of the ampule body 4 (thickness T₁ of the trunk 9), and is formed so as to have a thickness T₃ for allowing opening by breaking off by a force of, for example, 70 N·m/mm or less (preferably 50 N·m/mm or less). Specifically, the thickness may be 10 to 50% of the layer thicknesses T₁ and T₂ of the plastic layers 2 in the ampule body 4 and the tab 21 respectively (see Fig. 5).

The plastic ampule 1 can be opened by breaking off of the thinner part 6 by grasping the tab 21 of the cap 5 and bending it. The bung 3 of the ampule body 4 is opened by breaking the seal, and the nozzle of the syringe is inserted into the bung 3 (not shown in a figure) to allow collection of the drug solution stored in the ampule body 4.

The plastic ampule 1 which integrally has the ampule body 4 and the cap 5 can be manufactured by, for example, the blow-fill-seal (BFS) method.

Specifically, first, the cyclic polyolefin as a material of the plastic ampule 1 is extrusion-molded to prepare a parison.

The obtained parison is then sandwiched in a split mold, the respective parts of the ampule body 4 are formed (blowing step), and the interior of the ampule body 4 is filled with the drug solution (filling step).

The respective parts of the cap 5 are formed by further sandwiching with a split mold, and the bung 3 of the ampule body 4 is sealed (sealing step) to obtain the plastic ampule 1 filled with the drug solution. The transparency of the thus obtained plastic ampule 1 is preferably 85% or more by measurement according to a transparency test, the first method in Test Method for Plastic Containers of the Japanese Pharmacopoeia.

The ribs 13 and 14 are formed along mating surfaces of the split mold when the parison is sandwiched by the split mold.

Thus, the plastic ampule 1 is made of the cyclicpolyolefin, which is composed of the single plastic layer 2 comprising the cyclic polyolefin with the glass transition temperature Tg of 50°C to 104°C. Thereby, cracks can be prevented during molding, and excellent moldability can be expressed. Particularly, even when the thickness of the plastic layer 2 is not uniform and the thicknesses of the ampule body 4 (Thickness T₁), the tab 21 (Thickness T₂) and the thinner part 6 (Thickness T₃) are different from each other, the excellent moldability can be effectively expressed.

Additionally, in the plastic ampule 1, the water vapor barrier property can be improved compared to generally used ampules made of polyolefins such as polyethylene and polypropylene, and the water vapor barrier property equivalent to that of glass ampules can be expressed.

Furthermore, the plastic ampule 1 is not a flexible container like a polyolefin ampule but a rigid container. Thereby, when the drug solution is discharged by inserting a syringe needle from the bung 3 into the ampule body 4, even if the syringe needle pokes the bottom wall 8 of the ampule body 4 because of an excessive insertion length of the syringe needle, the bottom wall 8 can be prevented from being pierced by the syringe needle.

Meanwhile, when a method in which the thinner part 6 as a cutting part is broken off between the ampule body 4 and the cap 5 is adopted as an opening method of the ampule like the plastic ampule 1, attention should be paid to scattering of the fragments and stability of the shape of the cutting part after opening.

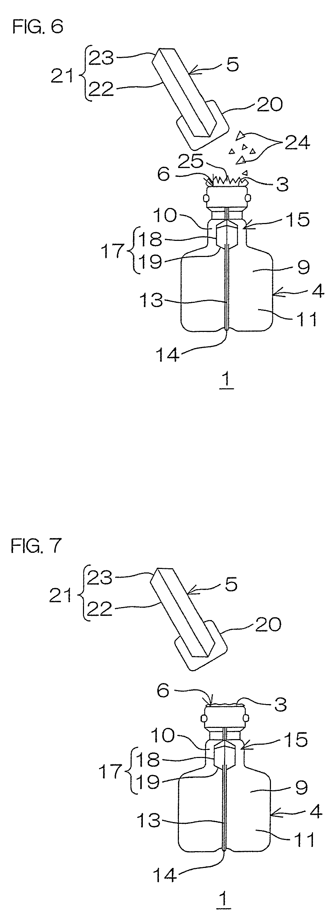

For example, when the glass ampule in the same shape as the plastic ampule 1 is broken off, some pieces (fragments 24) of the ampule body 4 and the cap 5 may scatter, and the fragments 24 may enter the ampule body 4 from the bung 3 as shown in Fig. 6. Even if breaking off of the cap 5 along the thinner part 6 prescribed as a cutting part is attempted, a cut line occurs in a portion other than the thinner part 6 (e.g., the cap 5 and the ampule body 4), and portions originating from the cap 5 and the ampule body 4 are likely to remain as sharp cut section 25 (fine resin pieces called "beards") after opening. Consequently, since attention should be paid to its handling after opening, it cannot be said that it is easy to handle.

Thus, the plastic ampule 1 is composed of the single layer of the plastic layer 2 made of a cyclic polyolefin, and the cyclic polyolefin has the glass transition temperature Tg of 50°C to 104°C. Thereby, scattering of the fragments during breaking off can be prevented as shown in Fig. 7. In addition, the cap 5 can be preferably broken off along the thinner part 6 prescribed as the cutting part. Although this allows the cut section 25 to remain around the bung 3 of the ampule body 4 after opening, the cut section 25 remains as a result of cutting off of the cap 5 along the thinner part 6, therefore the shape of the cut section 25 is stabilized in a blunt shape.

Also, this plastic ampule 1 can be opened by twisting off the thinner part 6 as a twisting portion between the ampule body 4 and the cap 5. In this case, the thinner part 6 is desirably formed so that it can be twisted off with a force of preferably 0.900 N·m or less, more preferably 0. 700 N·m or less. Thereby, the thinner part 6 can be easily twisted off. Additionally, for enabling the thinner part 6 to be twisted off with a force within the range mentioned above, it is preferable that, for example, the plastic ampule 1 is made of a cyclic polyolefin with a glass transition temperature Tg of 80°C or lower.

In addition, the plastic ampule 1 can be preferably applied to ampules for a drug solution in which a dose is small like a narcotic (for example, morphine etc.) and sufficient effects of the drug are hardly obtained when a ratio of its content stored in a dose unit is severely decreased.

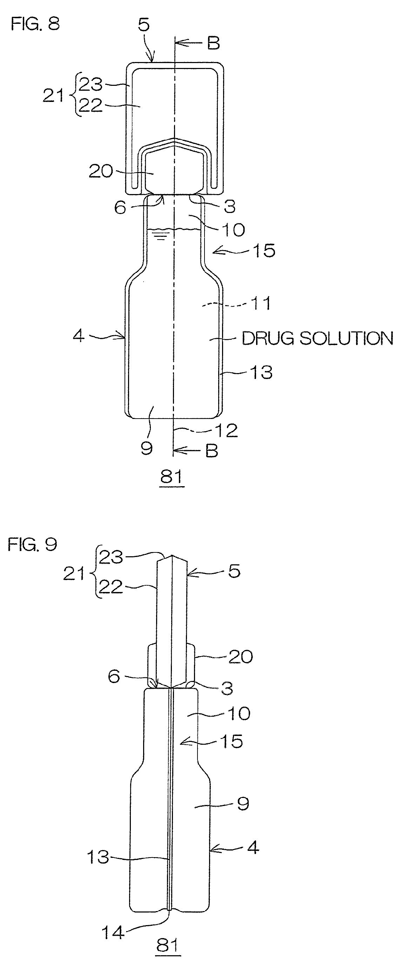

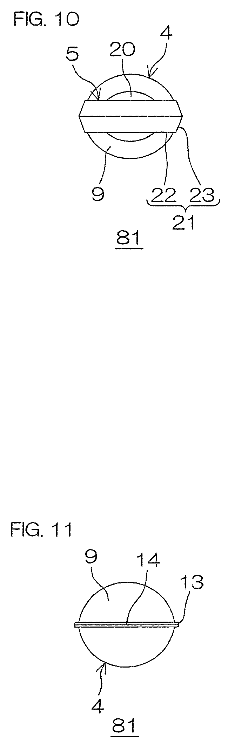

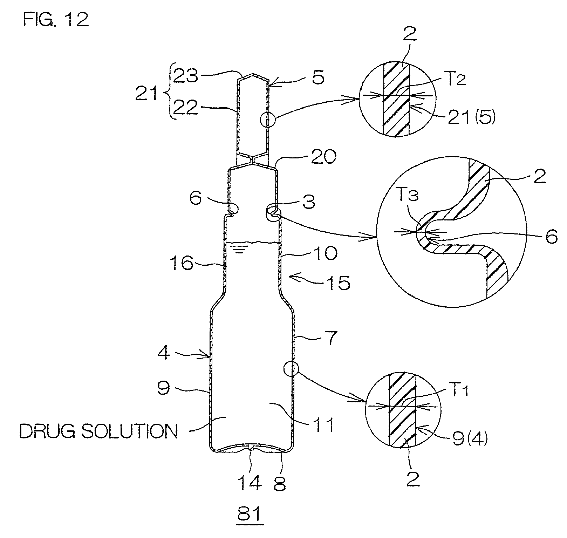

Fig. 8 is the front view of the plastic ampule in the second embodiment of the present invention. FIG. 9 is the left side view of the plastic ampule shown in Fig. 8. FIG. 10 is the plan view of the plastic ampule shown in Fig. 8. Fig. 11 is the bottom view of the plastic ampule shown in Fig. 8. Fig. 12 is the sectional view taken along line B-B of the plastic ampule shown in Fig. 8. In relation to the plastic ampule shown in Fig. 8, the rear view coincides with the front view (Fig. 8), and the right side view coincides with the left side view (Fig. 9). In Fig. 8 to Fig. 12, the parts corresponding to respective parts shown in Fig. 1 to Fig. 5 are numbered with the same reference numbers respectively.

In the first embodiment mentioned above, the trunk 9 of the ampule body 4 was formed so as to have a larger width than that of the tab 21, but it may be constructed so as to have the same width as the tab 21 as shown in Fig. 8. In other words, a plastic ampule 81 of the second embodiment may be in a slim shape, in which the width of the trunk 9 of its ampule body 4 is smaller than that of the trunk 9 of the ampule body 4 of the plastic ampule 1 in the first embodiment. In this case, since the volume per unit length of the trunk 9 is decreased in comparison with that of the first embodiment, the trunk 9 and the neck part 10 may be longer than those of the first embodiment in order to increase the capacity of the drug solution storage cell 11 to 1 mL to 5 mL.

Here, unlike the plastic ampule 1 in the first embodiment, the plastic ampule 81 in the second embodiment has a connecting part 20 narrower than the neck part 10, and the thickness T₃ of the bung 3 (thinner part 6) is thinner compared to the plastic ampule 1 in the first embodiment. Thereby, the thinner part 6 of the plastic ampule 81 in the second embodiment can be easily twisted off with a force of 0.900 N·m or less.

In addition, although the reinforcing member 17 is installed on the stepped part 15 of the ampule body 4 in the first embodiment, the reinforcing member 17 may be omitted like the plastic ampule 81 in the second embodiment.

Like the plastic ampule 1, such a construction can achieve effects such as prevention of cracks during molding, excellent moldability, water vapor barrier property equivalent to that of a glass ampule, prevention of piercing of the syringe needle, and suppression of scattering of fragments during opening by breaking off.

Although embodiments of the present invention have been described above, embodiments of the present invention are not restricted thereto, and various changes can be made to the design within the scope of the subject matters described in the claims.

The plastic ampule of the present invention can be widely used, for example, for medical application.

The embodiments of the present invention are only concrete examples used for demonstrating the technical content of the present invention, the present invention should not be interpreted exclusively within the concrete examples, and the scope of the present invention is limited only by the appended claims.

In addition, the constituents indicated in respective embodiments of the present invention can be combined with each other within the scope of the present invention.

This patent application corresponds to Japanese Patent Application No. 2011-84740 filed with the Japan Patent Office on April 6, 2011

### EXAMPLES

Although the present invention shall now be described based on examples and comparative examples, the present invention is not restricted by the following examples.

### <Example 1>

The plastic ampules in the same shape as the plastic ampule 1 shown in Fig. 1 to Fig. 5 (capacity of 1 mL) were produced by the blow-fill-seal method using a cyclic polyolefin (APEL (registered trademark) APL8008T, Tg=70°C, Vicat softening point=77°C). The plastic ampules were filled with water as the drug solution.

### <Reference Example 1>

Plastic ampules were produced in the same way as Example 1 except that a cyclicpolyolefin (Zeonor (registered trademark) ZEONOR750R, Tg=70°C, Vicat softening point=79°C) was used as a material for forming a plastic layer.

### < Reference Example 2>

Plastic ampules were produced in the same way as Example 1 except that a cyclicpolyolefin (Zeonor (registered trademark) ZEONOR1020R, Tg=102°C, Vicat softening point=119°C) was used as a material for forming a plastic layer.

### < Reference Example 3>

Plastic ampules were produced in the same way as Example 1 except that a cyclic polyolefin (TOPAS (registered trademark), Tg=65°C) was used as a material for forming a plastic layer.

### <Example 2>

Plastic ampules were produced in the same way as Example 1 except that a cyclic polyolefin (APEL (registered trademark) APL6509T, Tg=80°C) was used as a material for forming a plastic layer.

### <Comparative Example 1>

Plastic ampules were produced in the same way as Example 1 except that a cyclic polyolefin (APEL (registered trademark) APL6011T, Tg=105°C, Vicat softening point=115°C) was used as a material for forming a plastic layer.

### <Comparative Example 2>

Plastic ampules were produced in the same way as Example 1 except that a cyclic polyolefin (APEL (registered trademark) APL6013T, Tg=125°C, Vicat softening point=135°C) was used as a material for forming a plastic layer.

### <Comparative Example 3>

Plastic ampules were produced in the same way as Example 1 except that a cyclic polyolefin (APEL (registered trademark) APL6015T, Tg=145°C, Vicat softening point=153°C) was used as a material for forming a plastic layer.

### <Comparative Example 4>

Plastic ampules were produced in the same way as Example 1 except that a cyclicpolyolefin (Zeonex (registered trademark) ZEONEX690R, Tg=136°C) was used as a material for forming a plastic layer.

### <Comparative Example 5>

Plastic ampules were produced in the same way as Example 1 except that a cyclicpolyolefin (Zeonex (registered trademark) ZEONEX790R, Tg=136°C) was used as a material for forming a plastic layer.

### <Evaluation>

### (1) Moldability

In the manufacturing processes of Examples 1-2, Reference Examples 1-3 and Comparative Examples 1-5, when the plastic ampule molded in a mold was demolded from the mold, it was visually confirmed whether or not cracks occurred on the ampule. The results are shown in Table 1.

**Table 1**

| | Resin | Tg (°C) | Thickness T₁ of the ampule body (µm) | State |
|---|---|---|---|---|
| Example 1 | APL8008T | 70 | 656 | Normally molded |
| Reference Example 1 | ZEONOR750R | 70 | 656 | Normally molded |
| Reference Example 2 | ZEONOR1020R | 102 | 686 | Normally molded |
| Reference Example 3 | - | 65 | 634 | Normally molded |
| Example 2 | APL6509T | 80 | 629 | Normally molded |
| Comparative Example 1 | APL6011T | 105 | - | In demolding from the mold, cracks occurred on the peripheral wall and bottom wall of the ampule trunk. |
| Comparative Example 2 | APL6013T | 125 | - | In demolding from the mold, cracks occurred on the peripheral wall of the ampule trunk. |
| Comparative Example 3 | APL6015T | 145 | - | In demolding from the mold, cracks occurred on the peripheral wall of the ampule trunk. |
| Comparative Example 4 | ZEONEX690R | 136 | - | Extrusion molding could not be normally conducted. |
| Comparative Example 5 | ZEONEX790R | 163 | - | Extrusion molding could not be normally conducted. |

As shown in Table 1, the ampules in Examples 1-2 and Reference Examples 1-3 could be normally molded (no crack), meanwhile, in Comparative Examples 1-3, when the plastic ampule was remolded from the mold, cracks occurred on the peripheral wall and/or bottom wall of the ampule trunk, the ampule was broken, and water in the drug solution storage cell was leaked. In Comparative Examples 4-5, extrusion molding could not be normally conducted.

### (2) Transparency

Transparencies of the respective plastic ampules in Examples 1-2 and Reference Examples 1-3 were measured according to the transparency test, the first method in Test Method for Plastic Containers of the Japanese Pharmacopoeia (Spectrophotometer UV-160A, Shimadzu Corporation, Wavelength: 450 nm). The results are shown in Table 2.

### (3) Moisture vapor permeation rate (water vapor barrier property)

The respective plastic ampules in Examples 1-2 and Reference Examples 1-3 were stored under environments at 25°C/40%RH (Relative Humidity) and 40°C/20%RH for 30 days. After storage, the moisture vapor permeation rates at 30 days were measured by measuring water loss from the initial measured values (Electronic balance HA-202M, A&D Company, Limited). From these measured values at 30 days, estimate values of storage at 25°C/40%RH for 3 years and at 40°C/20%RH for 6 months were calculated. The results are shown in Table 2.

### (4) States of the scattered fragments and shape stability of the cutting part

10 plastic ampules in each of Examples 1-2 and Reference Examples 1-3 were opened by bending the tabs to break them off. The states of the scattered fragments during opening were visually confirmed. In addition, the shapes of the cutting parts after opening were visually confirmed. The results are shown in Table 2.

**Table 2**

| | Resin | | Transparency | Moisture vapor permeation rate (Estimate values calculated from the results at 1 month) | | State of scattering | Shape of the cutting part in breaking off | Breaking off (N) | Twisting off (N·m) |
|---|---|---|---|---|---|---|---|---|---|
| | | Tg (°C) | Wavelength 450nm(in water) | 25°C/40%RH Estimate value at 3 years | 40°C/20%RH Estimate value at 6 months | | | | |
| Example 1 | APL8008T | 70 | 97.6% | 3.91% | 2.31% | Scattering in 2/10 ampules | 10/10 OK | 31.912 | 0.653 |
| Reference Example 1 | ZEONOR750R | 70 | 98.3% | 3.89% | 2.54% | Scattering in 1/10 ampules | 10/10 OK | 48.936 | 0.674 |
| Reference Example 2 | ZEONOR1020R | 102 | 98.6% | 3.40% | 2.45% | Scattering in 1/10 ampules | 9/10 OK | 44.61 | 0.829 |
| Reference Example 3 | - | 65 | 97.8% | 4.90% | 3.02% | Scattering in 2/10 ampules | 10/10 OK | 33.582 | 0.538 |
| Example 2 | APL6509T | 80 | 90.5% | 4.13% | 2.82% | Scattering in 1/10 ampules | 10/10 OK | 18.224 | 0.551 |

As shown in Table 2, all of Examples 1-2 and Reference Examples 1-3 showed preferable values regarding transparency and water vapor barrier property. Also, in relation to the states of the scattered fragments, 2 of 10 ampules (2/10 ampules) caused scattering in Example 1. Similarly, scattering occurred in 1/10 ampules in Reference Example 1, 1/10 ampules in Reference Example 2, 2/10 ampules in Reference Example 3, and 1/10 ampules in Example 2. This level of scattering had virtually no problem.

In relation to shape stability of the cutting part, all 10 of the 10 plastic ampules in Example 1 and Reference Example 1 could be preferably opened along the thinner parts, and 9 of the 10 ampules in Reference Example 2, and 10 of the 10 ampules in Reference Example 3 and Example 2 could also be preferably opened along the thinner parts.

### (5) Opening performance

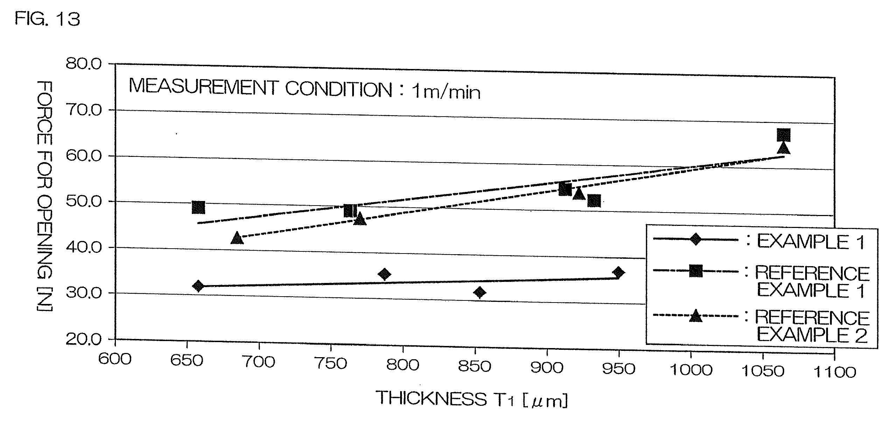

In the respective plastic ampules of Example 1 and Reference Examples 1-2, it was investigated how the force required for breaking off the cap shifts with a change of the thickness T₁ (650 µm to 1050 µm) of the ampule body, by using an autograph. The results of breaking off are shown in Fig. 13.

As shown in Fig. 13, it was revealed that if the thickness T₁ of the ampule body was around 1000µm, the force required for opening (opening force) was to an extent to which the force could be sufficiently applied by fingers squeezing the tab (70.0 N or less).

Additionally, in the respective plastic ampules of Examples 1-2 and Reference Examples 1-3 (thickness T₁ of the ampule body is 650 µm), the opening forces required for breaking off and twisting off were respectively measured. The results are shown in Table 2. In relation to the opening by breaking off, the tab was pushed by an autograph while the ampule body was fixed (autograph, A&D Company, Limited, TENSILONRTG-1225, push rate: 1000 mm/min.) to measure a peak value until opening. In relation to the opening by twisting off, the tab was fixed to a digital force gauge (Digital Force Gauge, IMADA CO.,LTD., HTG2-2N) and twisted while the ampule body was grasped to measure a peak value until opening.

In relation to the respective plastic ampules of Examples 1-2 and Reference Examples 1-3, a sensory test was conducted for opening performance. Specifically, 16 different subjects including adult males and females opened the cap of the plastic ampules in Examples 1-2 and Reference Examples 1-3 respectively by breaking off/twisting off, and the respective opening methods were sensorial ly judged by allowing the subjects to choose any of the following (A) to (D). The results are shown in Tables 3 and 4.
(A) It could be easily opened.
(B) It could be opened, although it was somewhat hard (somewhat difficult to open).
(C) It could be opened, although it was considerably hard (difficult to open).
(D) It could not be opened (impossible to open).

**Table 3**

| Breaking off | | | | | | | |
|---|---|---|---|---|---|---|---|
| | Resin | | (A) easy to open (persons) | (B) somewhat difficult to open (persons) | (C) difficult to open (persons) | (D) impossible to open (persons) | Total (persons) |
| | | Tg (°C) | | | | | |
| Example 1 | APL8008T | 70 | 12 | 4 | 0 | 0 | 16 |
| Reference Example 1 | ZEONOR750R | 70 | 3 | 5 | 8 | 0 | 16 |
| Reference Example 2 | ZEONOR1020R | 102 | 1 | 6 | 9 | 0 | 16 |
| Reference Example 3 | - | 65 | 12 | 4 | 0 | 0 | 16 |
| Example 2 | APL6509T | 80 | 16 | 0 | 0 | 0 | 16 |

**Table 4**

| Twisting off | | | | | | | |
|---|---|---|---|---|---|---|---|
| | Resin | | (A) easy to open (persons) | (B) somewhat difficult to open (persons) | (C) difficult to open (persons) | (D) impossible to open (persons) | Total (persons) |
| | | Tg (°C) | | | | | |
| Example 1 | APL8008T | 70 | 7 | 5 | 1 | 3 | 16 |
| Reference Example 1 | ZEONOR750R | 70 | 7 | 5 | 0 | 4 | 16 |
| Reference Example 2 | ZEONOR1020R | 102 | 0 | 2 | 8 | 6 | 16 |
| Reference Example 3 | - | 65 | 0 | 6 | 6 | 4 | 16 |
| Example 2 | APL6509T | 80 | 4 | 4 | 8 | 0 | 16 |

### (6) Drop test

One each of plastic ampules in Examples 1-2 and Reference Examples 1-3 was dropped from heights of 80 cm and 120 cm respectively with the bottom side down three times, to visually confirm states of breakage. This test was conducted 10 times in each Example and Reference Example. The results are shown in Tables 5 and 6.

**Table 5**

| Height of 80 cm | | | | | |
|---|---|---|---|---|---|
| | Resin | | First time (number of breakage) | Second time (number of breakage) | Third time (number of breakage) |
| | | Tg (°C) | | | |
| Example 1 | APL8008T | 70 | 0 | 0 | 0 |
| Reference Example 1 | ZEONOR750R | 70 | 0 | 0 | 0 |
| Reference Example 2 | ZEONOR1020R | 102 | 0 | 0 | 0 |
| Reference Example 3 | - | 65 | 0 | 0 | 0 |
| Example 2 | APL6509T | 80 | 0 | 0 | 0 |

**Table 6**

| Height of 120 cm | | | | | |
|---|---|---|---|---|---|
| | Resin | | First time (number of breakage) | Second time (number of breakage) | Third time (number of breakage) |
| | | Tg (°C) | | | |
| Example 1 | APL8008T | 70 | 0 | 0 | 0 |
| Reference Example 1 | ZEONOR750R | 70 | 0 | 0 | 0 |
| Reference Example 2 | ZEONOR1020R | 102 | 0 | 0 | 0 |
| Reference Example 3 | - | 65 | 0 | 0 | 0 |
| Example 2 | APL6509T | 80 | 0 | 0 | 0 |

### <Example 3>

The plastic ampules in the same shape as the plastic ampule 1 shown in Fig. 8 to Fig. 12 (capacity of 1 mL) were produced by the blow-fill-seal method using a cyclic polyolefin (APEL (registered trademark) APL8008T, Tg=70°C, Vicat softening point=77°C). The plastic ampules were filled with water as the drug solution.

### <Reference Example 4>

Plastic ampules were produced in the same way as Example 3 except that a cyclicpolyolefin (Zeonor (registered trademark) ZEONOR750R, Tg=70°C, Vicat softening point=79°C) was used as a material for forming a plastic layer.

### < Reference Example 5>

Plastic ampules were produced in the same way as Example 3 except that a cyclic polyolefin (Zeonor (registered trademark) ZEONOR1020R, Tg=102°C, Vicat softening point=119°C) was used as a material for forming a plastic layer.

### < Reference Example 6>

Plastic ampules were produced in the same way as Example 3 except that a cyclicpolyolefin (TOPAS (registeredtrademark), Tg=65°C) was used as a material for forming a plastic layer.

### <Example 4>

Plastic ampules were produced in the same way as Example 3 except that a cyclic polyolefin (APEL (registered trademark) APL6509T, Tg=80°C) was used as a material for forming a plastic layer.

### <Comparative Example 6>

Plastic ampules were produced in the same way as Example 3 except that a cyclic polyolefin (APEL (registered trademark) APL6011T, Tg=105°C, Vicat softening point=115°C) was used as a material for forming a plastic layer.

### <Comparative Example 7>

Plastic ampules were produced in the same way as Example 3 except that a cyclic polyolefin (APEL (registered trademark) APL6013T, Tg=125°C, Vicat softening point=135°C) was used as a material for forming a plastic layer.

### <Comparative Example 8>

Plastic ampules were produced in the same way as Example 3 except that a cyclic polyolefin (APEL (registered trademark) APL6015T, Tg=145°C, Vicat softening point=153°C) was used as a material for forming a plastic layer.

### <Comparative Example 9>

Plastic ampules were produced in the same way as Example 3 except that a cyclicpolyolefin (Zeonex (registered trademark) ZEONEX690R, Tg=136°C) was used as a material for forming a plastic layer.

### <Evaluation>

The plastic ampules of Examples 3-4, Reference Examples 4-6 and Comparative Examples 6-9 were respectively evaluated for the above-mentioned (1) moldability, (2) transparency, (3) moisture vapor permeation rate (water vapor barrier property), (4) state of scattered fragments and shape stability of the cutting part, (5) opening performance (only twisting off), and (6) drop test. The results of (1) moldability are shown in Table 7, the results of (2) transparency, (3) moisture vapor permeation rate (water vapor barrier property) and (4) state of scattered fragments and shape stability of the cutting part are shown in Table 8, the results of (5) opening performance are shown in Table 9, and the results of (6) drop test are shown in Table 10 and Table 11. As the evaluation of (5) opening performance, (E) problem in opening due to cracks (when breaking off is attempted, cracks occurred on the broken section) was added.

**Table 7**

| | Resin | Tg (°C) | Thickness T₁ of the ampule body (µm) | State |
|---|---|---|---|---|
| Example 3 | APL8008T | 70 | 656 | Normally molded |
| Reference Example 4 | ZEONOR750R | 70 | 656 | Normally molded |
| Reference Example 5 | ZEONOR1020R | 102 | 686 | Normally molded |
| Reference Example 6 | - | 65 | 634 | Normally molded |
| Example 4 | APL6509T | 80 | 629 | Normally molded |
| Comparative Example 6 | APL6011T | 105 | 646 | Normally molded |
| Comparative Example 7 | APL6013T | 125 | 723 | Normally molded |
| Comparative Example 8 | APL6015T | 145 | 729 | Normally molded |
| Comparative Example 9 | ZEONEX690R | 136 | 641 | Normally molded |

**Table 8**

| | Resin | | Transparency | Moisture vapor permeation rate (Estimate values calculated from the results at 1 month) | | Twisting off (N·m) |
|---|---|---|---|---|---|---|
| | | Tg (°C) | Wavelength 450nm (in water) | 25°C/40%RH Estimate value at 3 months | 40°C/20%RH Estimate value at 6 months | |
| Example 3 | APL8008T | 70 | 97.6% | 2.52% | 1.79% | 0.499 |
| Reference Example 4 | ZEONOR750R | 70 | 98.30 | 3.01% | 1.74% | 0.606 |
| Reference Example 5 | ZEONOR1020R | 102 | 98.6% | 3.32% | 2.04% | 0.698 |
| Reference Example 6 | - | 65 | 97.8% | 3.57% | 2.41% | 0.564 |
| Example 4 | APL6509T | 80 | 91.4% | 3.31% | 2.25% | 0.525 |
| Comparative Example 6 | APL6011T | 105 | 95.9% | 3.08% | 1.71% | 0.614 |
| Comparative Example 7 | APL6013T | 125 | 94.8% | 1.42% | 1.04% | 0.489 |
| Comparative Example 8 | APL6015T | 145 | 85.3% | 1.69% | 1.41% | 0.585 |
| Comparative Example 9 | ZEONEX690R | 136 | 96.6% | 1.62% | 1.12% | 0.786 |

**Table 9**

| Twisting off | | | | | | | | |
|---|---|---|---|---|---|---|---|---|
| | Resin | | (A) easy to open (persons) | (B) somewhat difficult to open (persons) | (C) difficult to open (persons) | (D) impossible to open (persons) | (E) problem in opening due to cracks (persons) | Total (persons) |
| | | Tg (°C) | | | | | | |
| Example 3 | APL8008T | 70 | 6 | 6 | 4 | 0 | 0 | 16 |
| Reference Example 4 | ZEONOR750R | 70 | 2 | 2 | 6 | 6 | 0 | 16 |
| Reference Example 5 | ZEONOR1020R | 102 | 0 | 4 | 2 | 8 | 2 | 16 |
| Reference Example 6 | - | 65 | 2 | 4 | 2 | 8 | 0 | 16 |
| Example 4 | APL6509T | 80 | 6 | 0 | 6 | 4 | 0 | 16 |
| Comparative Example 6 | APL6011T | 105 | 4 | 0 | 0 | 8 | 4 | 16 |
| Comparative Example 7 | APL6013T | 125 | 2 | 0 | 2 | 4 | 8 | 16 |
| Comparative Example 8 | APL6015T | 145 | 2 | 0 | 0 | 4 | 10 | 16 |
| Comparative Example 9 | ZEONEX690R | 136 | 2 | 2 | 0 | 10 | 2 | 16 |

**Table 10**

| Height of 80cm | | | | | |
|---|---|---|---|---|---|
| | Resin | | First time (number of breaks) | Second time (number of breaks) | Third time (number of breaks) |
| | | Tg (°C) | | | |
| Example 3 | APL8008T | 70 | 0 | 0 | 0 |
| Reference Example 4 | ZEONOR750R | 70 | 0 | 0 | 0 |
| Reference Example 5 | ZEONOR1020R | 102 | 0 | 0 | 0 |
| Reference Example 6 | - | 65 | 0 | 0 | 0 |
| Example 4 | APL6509T | 80 | 0 | 0 | 0 |
| Comparative Example 6 | APL6011T | 105 | 0 | 0 | 0 |
| Comparative Example 7 | APL6013T | 125 | 0 | 1 | 0 |
| Comparative Example 8 | APL6015T | 145 | 0 | 0 | 0 |
| Comparative Example 9 | ZEONEX690R | 136 | 0 | 0 | 0 |

**Table 11**

| Height of 120cm | | | | | |
|---|---|---|---|---|---|
| | Resin | | First time (number of breaks) | Second time (number of breaks) | Third time (number of breaks) |
| | | Tg (°C) | | | |
| Example 3 | APL8008T | 70 | 0 | 0 | 0 |
| Reference Example 4 | ZEONOR750R | 70 | 0 | 0 | 1 |
| Reference Example 5 | ZEONOR1020R | 102 | 0 | 0 | 0 |
| Reference Example 6 | - | 65 | 0 | 0 | 0 |
| Example 4 | APL6509T | 80 | 0 | 0 | 0 |
| Comparative Example 6 | APL6011T | 105 | 0 | 0 | 0 |
| Comparative Example 7 | APL6013T | 125 | 0 | 0 | 1 |
| Comparative Example 8 | APL6015T | 145 | 0 | 2 | 2 |
| Comparative Example 9 | ZEONEX690R | 136 | 0 | 0 | 0 |

### Description of Reference Numerals

- 1: Plastic ampule
- 2: Plastic layer
- 3: Bung
- 4: Ampule body
- 5: Cap
- 6: Thinner part
- 21: Tab
- 25: Cut section
- 81: Plastic ampule

## Claims

1. A plastic ampule (1) which is composed of a single layer of a plastic layer (2) consisting only of a cyclic polyolefin with a glass transition temperature of 50°C to 104°C,
integrally comprises
an ampule body (4) formed in a bottle shape with a top part (10) and a bottom part (9) and having a bung (3) for discharging a drug solution on the top part (10),
a cap (5) attached to the ampule body (4) so as to seal the bung (3), and
a thinner part (6) having a layer thickness thinner than those of the ampule body (4) and the cap (5), formed along a circumferential direction of the bung (3) and connecting between the ampule body (4) and the cap (5),
and is opened by breaking off or twisting off the thinner part (6) as a cutting part between the ampule body (4) and the cap (5), wherein the cyclic polyolefin is a polymer having repeating units indicated by the following Formula (2): 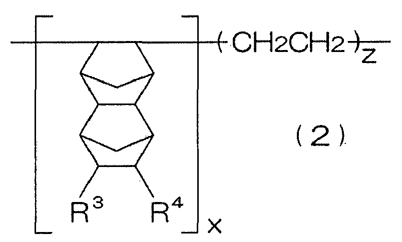 wherein, in the Formula (2), R³ and R⁴ are the same or different, with each indicating hydrogen, a hydrocarbon residue, or a polar group; R³ and R⁴ may respectively be bonded mutually to form a ring; and x and z are the same or different with each indicating an integer not less than 1.

2. The plastic ampule (1) according to claim 1, wherein the layer thickness of the ampule body (4) is 500 µm to 1200 µm.

3. The plastic ampule (1) according to claim 1 or 2, wherein a content of the drug solution in the plastic ampule (1) is 1 mL to 5 mL, and a capacity of the ampule body (4) for the drug solution is 1.5 mL to 7.5 mL.

4. The plastic ampule (1) according to any one of the claims 1 to 3, wherein the thinner part (6) is formed with a thickness that allows opening by breaking off the thinner part (6) by a force of 70 N·m/mm or less.

5. The plastic ampule (1) according to any one of the claims 1 to 3, wherein the thinner part (6) is formed with a thickness that allows opening by twisting off the thinner part (6) with a force of 0.900 N·m or less.

6. The plastic ampule (1) according to any one of the claims 1 to 5, wherein the cap (5) is a tab formed in a flat shape.

## Patentansprüche

1. Kunststoffampulle (1), aufgebaut aus einer einzelnen Kunststoffschicht (2), die nur aus einem cyclischen Polyolefin mit einer Glasübergangstemperatur von 50 bis 104°C besteht,
integral umfassend
einen Ampullenkörper (4), der in Flaschenform mit einem oberen Abschnitt (10) und einem unteren Abschnitt (9) gebildet ist, und der auf dem oberen Abschnitt (10) einen Stopfen (3) zur Freisetzung einer Medikamentlösung aufweist,
eine Kappe (5), die am Ampullenkörper (4) angebracht ist, um den Stopfen (3) zu versiegeln, und
einen dünneren Abschnitt (6), der eine dünnere Schichtdicke als der Ampullenkörper (4) und die Kappe (5) aufweist, der entlang einer Umfangsrichtung des Stopfens (3) gebildet ist und eine Verbindung zwischen dem Ampullenkörper (4) und der Kappe (5) bildet,
und die geöffnet wird durch Abbrechen oder Abdrehen des dünneren Abschnitts (6) als Schneideelement zwischen dem Ampullenkörper (4) und der Kappe (5), worin das cyclische Polyolefin en Polymer ist, das Wiederholungseinheiten der folgenden Formel (2) aufweist: 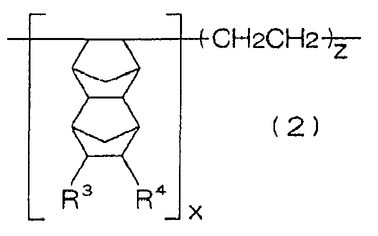 worin in Formel (2) R³ und R⁴ gleich oder unterschiedlich sind und jeweils Wasserstoff, einen Kohlenwasserstoffrest oder eine polare Gruppe darstellen, oder R³ und R⁴ miteinander verbunden sein können, um einen Ring zu bilden; und x und z gleich oder unterschiedlich sind und jeweils eine ganze Zahl von nicht weniger als 1 darstellen.

2. Kunststoffampulle (1) gemäß Anspruch 1, worin die Schichtdicke des Ampullenkörpers (4) 500 bis 1.200 µm ist.

3. Kunststoffampulle (1) gemäß Anspruch 1 oder 2, worin der Gehalt der Medikamentenlösung in der Kunststoffampulle (1) 1 bis 5 ml ist, und die Kapazität des Ampullenkörpers (4) für die Medikamentlösung 1,5 bis 7,5 ml ist.

4. Kunststoffampulle (1) gemäß irgendeinem der Ansprüche 1 bis 3, worin der dünnere Abschnitt (6) in einer Dicke gebildet ist, die das Öffnen durch Abbrechen des dünnen Teils (6) mit einer Kraft von 70 N·m/mm oder weniger ermöglicht.

5. Kunststoffampulle (1) gemäß irgendeinem der Ansprüche 1 bis 3, worin der dünnere Abschnitt (6) in einer Dicke gebildet ist, die das Abdrehen des inneren Teils (6) mit einer Kraft von 0,900 N·m/mm oder weniger ermöglicht.

6. Kunststoffampulle (1) gemäß irgendeinem der Ansprüche 1 bis 5, worin die Kappe (5) eine Platte ist, die in einer flachen Form gebildet ist.

## Revendications

1. Ampoule (1) en plastique qui est composée d'une couche unique d'une couche (2) de plastique ne consistant qu'en une polyoléfine cyclique avec une température de transition vitreuse de 50°C à 104°C,
comprend de manière intégrale
un corps (4) d'ampoulé formé à la forme d'une bouteille avec une partie supérieure (10) et une partie inférieure (9) et ayant un goulot (3) pour décharger une solution médicamenteuse sur la partie supérieure (10),
un bouchon (5) fixé au corps (4) d'ampoule de façon à sceller le goulot (3), et
une partie plus mince (6) ayant une épaisseur de couche plus mince que celles du corps (4) d'ampoule et du bouchon (5), formée le long d'un sens circonférentiel du goulot (3) et assurant la connexion entre le corps (4) d'ampoule et le bouchon (5),
et est ouverte par cassure ou torsion de la partie plus mince (6) comme une partie de coupe entre le corps (4) d'ampoule et le bouchon (5), dans laquelle la polyoléfine cyclique est un polymère ayant des motifs répétés indiqués par la Formule (2) suivante : 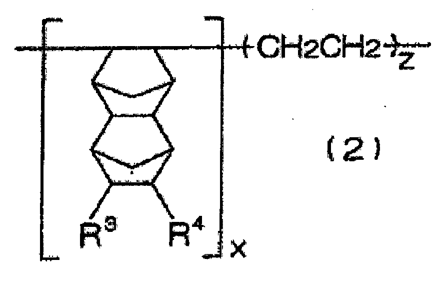 dans laquelle, dans la Formule (2), R³ et R⁴ sont les mêmes ou différents, avec chacun indiquant un hydrogène, un résidu hydrocarboné, ou un groupe polaire ; R³ et R⁴ peuvent respectivement être liés mutuellement pour former un cycle ; et x et z sont les mêmes ou différents avec chacun indiquant un entier non inférieur à 1.

2. Ampoule (1) en plastique selon la revendication 1, dans laquelle l'épaisseur de couche du corps (4) d'ampoule est 500 µm à 1 200 µm.

3. Ampoule (1) en plastique selon la revendication 1 ou 2, dans laquelle un contenu de la solution médicamenteuse dans l'ampoule (1) en plastique est 1 ml à 5 ml, et une capacité du corps (4) d'ampoule pour la solution médicamenteuse est 1,5 ml à 7,5 ml.

4. Ampoule (1) en plastique selon l'une quelconque des revendications 1 à 3, dans laquelle la partie plus mince (6) est formée avec une épaisseur qui permet une ouverture par cassure de la partie plus mince (6) par une force de 70 N·m/mm ou moins.

5. Ampoule (1) en plastique selon l'une quelconque des revendications 1 à 3, dans laquelle la partie plus mince (6) est formée avec une épaisseur qui permet une ouverture par torsion de la partie plus mince (6) avec une force de 0,900 N·m ou moins.

6. Ampoule (1) en plastique selon l'une quelconque des revendications 1 à 5, dans laquelle le bouchon (5) est une languette formée à une forme plate.
